# EUROPEAN PATENT APPLICATION

(11) **EP 2 730 367 A1**
(43) Date of publication of application: **14.05.2014**
(21) Application number: 11869095.7
(22) Date of filing: 07.07.2011
(51) Int. Cl.: B23P 19/06, B25J 15/08

(54) **END EFFECTOR AND ROBOT**

(71) Applicant: Kabushiki Kaisha Yaskawa Denki, Kitakyushu-shi, Fukuoka 806-0004 (JP)
(72) Inventor: DAN, Yoichiro, Kitakyushu-shi Fukuoka 806-0004 (JP); KUBOTA, Yoshiaki, Kitakyushu-shi Fukuoka 806-0004 (JP)
(74) Representative: Grünecker, Kinkeldey, Stockmair & Schwanhäusser
(86) International application number: PCT/JP2011/065611
(87) International publication number: WO 2013/005330

(57) **Abstract**

A task is to provide an end effector and a robot that can automate the process of holding and rotating a screw member and reduce the cost required for this process. To solve the task, the end effector and the robot have a holding unit that holds a screw member to be rotatable around the axis line of the screw member, and a rotary unit that is provided on the axis line, moves linearly along the axis line in a condition of being in contact with the head portion of the screw member held by the holding unit, and rotates the screw member around the axis line by rotation accompanying the linear motion.

## Description

### Field

The present invention relates to an end effector and a robot.

### Background

Conventionally known is a robot that holds a screw member such as a bolt and a nut by an end effector provided at a terminal movable portion of an arm, and positions the screw member to a given position such as a bolt hole.

Furthermore, disclosed is a technology that holds an electric screwdriver, which is provided with a function to send out bolts, by an end effector, and tightens the bolts by the electric screwdriver while the bolts are sent out (for example, see Japanese Patent Application Laid-open No. H02-190285).

### Citation List

### Patent Literature

Patent Literature 1: Japanese Patent Application Laid-open No. H02-190285

### Summary

### Technical Problem

With the conventional technology that tightens the bolts by the electric screwdriver held by the end effector, the movement to hold and release the electric screwdriver is required, and thus there has been a drawback in that the movement of the end effector is likely to be complex. Furthermore, because the electric screwdriver is required in addition to the end effector, there has been another drawback in that device cost and electricity cost tend to increase.

Moreover, there has been a drawback in that such conventional technology does not allow the bolt held by the end effector to be tightened as it is. These drawbacks are not restricted to the tightening of the screw member, and are likely to come up in the removal of the screw member.

In view of the above-described situations, an object of the disclosed technology is to provide an end effector and a robot that can automate the process of holding and rotating a screw member and reduce the cost required for this process.

### Solution to Problem

According to an embodiment, an end effector includes: a holding unit that holds a screw member to be rotatable around an axis line of the screw member; and a rotary unit that is provided on the axis line, moves linearly along the axis line in a condition of being in contact with a head portion of the screw member held by the holding unit, and rotates the screw member around the axis line by rotation accompanying the linear motion.

### Advantageous Effects of Invention

In accordance with one aspect of the end effector disclosed in the present application, the process of holding and rotating a screw member can be automated and the cost required for this process can be reduced.

### Brief Description of Drawings

FIG. 1 is a perspective view illustrating a robot according to a first embodiment.
FIG. 2 is a side view of an end effector in the first embodiment.
FIG. 3 is a top view of holding claws in the first embodiment.
FIG. 4A is a part 1 of explanatory diagrams illustrating an example of the movement of the end effector in the first embodiment.
FIG. 4B is a part 2 of the explanatory diagrams illustrating the example of the movement of the end effector in the first embodiment.
FIG. 4C is a part 3 of the explanatory diagrams illustrating the example of the movement of the end effector in the first embodiment.
FIG. 5 is a side view of a rotary unit according to a second embodiment.

### Description of Embodiments

With reference to the accompanying drawings, the following describes in detail certain exemplary embodiments of an end effector and a robot disclosed in the present application. The present invention, however, is not intended to be restricted by these exemplary embodiments.

### First Embodiment

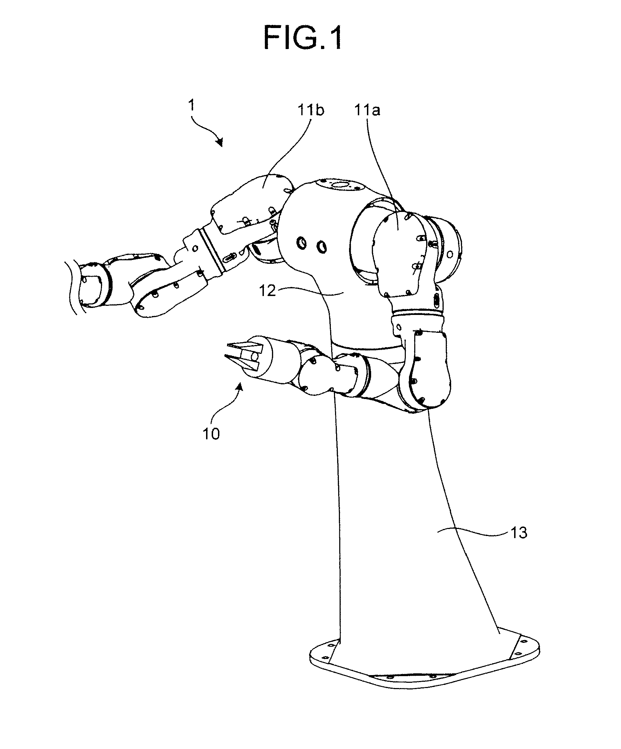

With reference to FIG. 1, the overall configuration of a robot 1 according to a first embodiment will be described first. FIG. 1 is a perspective view illustrating the robot 1 in the first embodiment. The movement control for an end effector 10 and the robot 1 illustrated in FIG. 1 is performed by a given control device not depicted.

As illustrated in FIG. 1, the robot 1 is what is called a dual-arm robot with two robot arms 11a and 11b as dual arms. While a dual-arm robot is used as the robot 1 here, the robot 1 may be a single-arm robot provided with one robot arm 11a.

Each of the robot arms 11a and 11b here is a multi-axial robot, and on the tip of the robot arm 11a, the end effector 10 is attached. The end effector 10 may also be attached to the robot arm 11b. Furthermore, the robot 1 has a function to rotate a trunk portion 12, on which the robot arms 11a and 11b are provided, along a level plane with respect to a support portion 13 that is secured to a floor surface or the like.

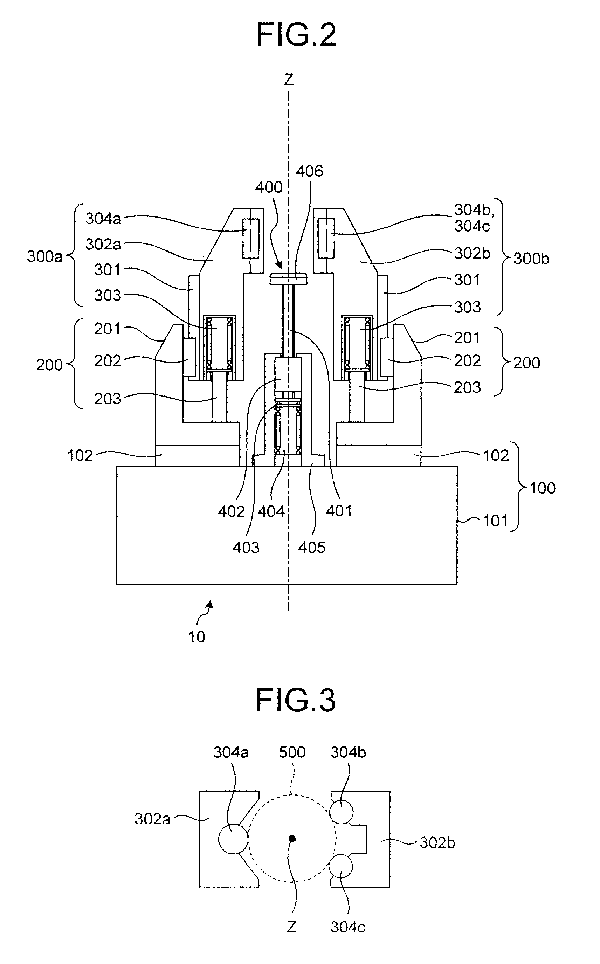

Next, with reference to FIG. 2, the end effector 10 that is attached to the robot arm 11a will be described. FIG. 2 is a side view of the end effector 10 in the first embodiment.

As illustrated in FIG. 2, the end effector 10 includes a slider unit 100, a pair of open/close units 200, holding units 300a and 300b provided on the respective open/close units 200, and a rotary unit 400. The open/close units 200 are provided at positions symmetrical to each other with a rotation axis Z indicated in FIG. 2 as a center.

The configuration of the slider unit 100 will be described first in detail. As illustrated in FIG. 2, on a base 101 included in the slider unit 100, a pair of mounts 102 is provided. Furthermore, inside the base 101, included is a mechanism (not depicted) that drives the mounts 102 to make them move away from or come close to each other (hereinafter, described as open/close) with the rotation axis Z as the center. Moreover, at the center of the base 101, the rotary unit 400 is secured.

The mechanism that drives the mounts 102 to open/close may be, for example, an air chuck or a drive mechanism with a motor and a feed screw combined.

Next, the configuration of the open/close units 200 will be described in detail. Each of the open/close units 200 is secured to the respective mounts 102. Furthermore, on an open/close claw 201 included in the open/close unit 200, a slider portion 202 of a linear motion guide is provided.

The linear motion guide here is configured with the slider portion 202 and a later described rail portion 301, and the rail portion 301 slides along the slider portion 202 in parallel with the rotation axis Z indicated in FIG. 2. Furthermore, as illustrated in FIG. 2, the open/close claw 201 is connected with a support 203 having an axis parallel to the rotation axis Z. The supports 203 are the members that support the respective holding units 300a and 300b.

Moreover, the open/close units 200 are secured on the respective mounts 102 of the slider unit 100 as in the foregoing, and thus the open/close units 200 and the holding units 300a and 300b supported on the respective supports 203 integrally open and close along with the open/close driving of the mounts 102.

Next, the configuration of the holding units 300a and 300b will be described in detail. The pair of holding units 300a and 300b holds a screw member on which a spiral groove is provided along a cylindrical or circular conical surface.

While the screw member held by the end effector 10 is exemplified as a bolt that is what is called a male screw in the first embodiment, such a screw member may be a female screw (for example, a nut). Furthermore, the screw member may be a member that includes a male thread or a female thread on a part thereof.

On each of holding claws 302a and 302b included in the holding units 300a and 300b, respectively, provided is the rail portion 301 that is paired with the above-described slider portion 202 to constitute the linear motion guide. In a cylindrical shaped hollow portion provided on the bottom side of each of the two holding claws 302a and 302b, a first spring 303 connected with the support 203 is housed. More specifically, the first spring 303 presses the holding claw 302a or 302b towards the tip side thereof.

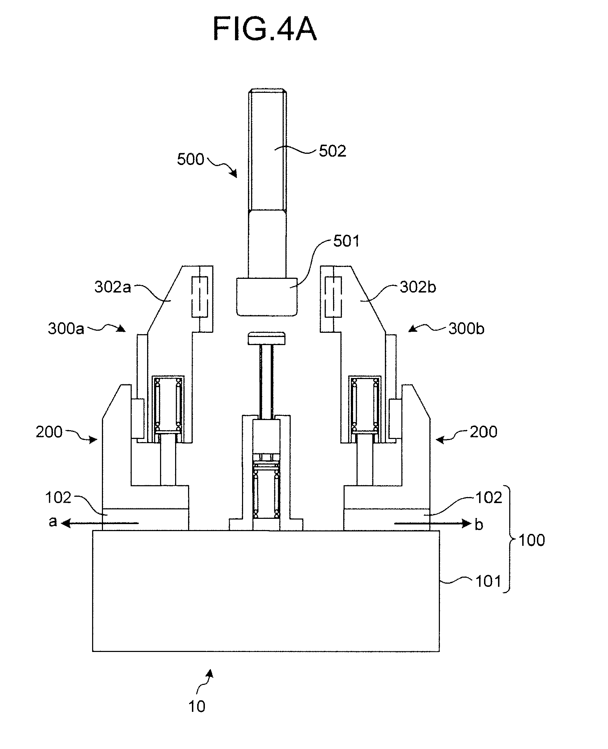

The first spring 303 here is housed inside the cylindrical shaped hollow portion, and thus minute dirt, dust, and such are prevented from being drawn in, thereby making it possible to prevent the deterioration of the relevant members and to facilitate the maintenance of the holding units 300a and 300b. The detail of the movement of the holding claws 302a and 302b will be described later with reference to FIGS. 4A to 4C.

As illustrated in FIG. 2, on the side surface of the tip portion of the holding claw 302a, a roller 304a is provided, and on the side surface of the tip portion of the holding claw 302b, a roller 304b and a roller 304c are provided. Now, with reference to FIG. 3, the holding claws 302a and 302b, and the rollers 304a, 304b, and 304c will be described. FIG. 3 is a top view of the holding claws 302a and 302b in the first embodiment.

As illustrated in FIG. 3, the holding claw 302a includes the roller 304a, and the holding claw 302b includes the roller 304b and the roller 304c. Furthermore, the rollers 304a, 304b, and 304c rotate around respective rotation axes parallel to the rotation axis Z.

Moreover, a bolt 500 illustrated in FIG. 3 is held by the end effector 10 such that the axis line of the bolt 500 is positioned to be coaxial with the rotation axis Z while each of the rollers 304a, 304b, and 304c, and the outer circumference of the head portion of the bolt 500 are in a condition of being in contact with each other.

Consequently, the bolt 500 held by the end effector 10 is made rotatable around the rotation axis Z. The bolt 500 here is held by the end effector 10 in the direction along the rotation axis Z not to deviate.

The end effector 10 can freely change the holding distance between the holding claw 302a and the holding claw 302b in response to the size of the bolt 500, and thus it is not necessary to replace the holding claws 302a and 302b or others even for a bolt of a different diameter.

While the situation to use the three rollers 304a, 304b, and 304c is exemplified in FIG. 3, four or more rollers may be used. When four rollers are used, the holding claw 302a and the holding claw 302b only need to be provided with two rollers each.

Furthermore, while the situation to hold the bolt 500 with two holding claws of the holding claw 302a and the holding claw 302b is exemplified in FIG. 3, three or more holding claws may be used. In this case, the number of the open/close units 200 and the number of the holding units 300a equal to the number of the holding claws are to be provided. Moreover, in place of the one or more holding units 300a, the holding unit 300b may be provided.

Referring back to FIG. 2, the configuration of the rotary unit 400 will be described in detail. As illustrated in FIG. 2, a cylinder 405 included in the rotary unit 400 is secured to the base 101, and a cylindrical shaped hollow portion is formed therein. Furthermore, at the top portion of the inner surface of the cylinder 405, a feed screw nut 402 is secured.

A feed screw shaft 401 inserted to the feed screw nut 402 moves linearly along the rotation axis Z, and rotates around the rotation axis Z as the axis. On the base end side of the feed screw shaft 401, a thrust bearing 403 is provided, and below the thrust bearing 403, a second spring 404 is provided.

More specifically, the thrust bearing 403 prevents the second spring 404 from interfering with the rotation of the feed screw shaft 401. Furthermore, the second spring 404 presses the feed screw shaft 401 towards the tip side thereof.

On the tip side of the feed screw shaft 401, a bolt holder 406 is provided. On the bolt holder 406, processing is made (for example, sticking a rubber pad thereon) to avoid slipping when the bolt holder 406 makes contact with the head portion of the bolt 500.

Next, with reference to FIGS. 4A to 4C, the detail of the movement by driving the robot arm 11a to hold the bolt 500 and insert it into a bolt hole by the end effector 10 will be described. FIGS. 4A to 4C are part 1 to part 3 of the explanatory diagrams illustrating an example of the movement of the end effector 10 in the first embodiment.

First, the end effector 10 holds, by the holding units 300a and 300b provided on the tip thereof, a head portion 501 of the bolt 500 placed in a container, on a work table, or on others not depicted. In this process, as illustrated in FIG. 4A, the holding units 300a and 300b hold the bolt 500 in such a direction that the head portion 501 of the bolt 500 is on the near side and a shaft portion 502 of the bolt 500 is on the other side.

As for the method to hold the head portion 501 of the bolt 500, a known method can be adopted. For example, the robot arm 11a determines the shape, orientation, and position of a plurality of bolts 500 in bulk in a container, and performs the movement of holding the head portion 501 of the bolt 500. In this process, the bolt 500 is held by the end effector 10 in such a position that the axis line of the bolt 500 is in parallel with the Z axis indicated in FIG. 2.

When holding the bolt 500, the control device not depicted turns the holding units 300a and 300b towards the head portion 501 side of the bolt 500. The control device further activates the open/close units 200 in the left/right directions (the arrows a and b) to open the holding units 300a and 300b, and then moves the holding units 300a and 300b to a position in which the head portion 501 of the bolt 500 can be pinched by both of the holding units 300a and 300b.

The end effector 10 subsequently closes the open/close units 200 to hold the head portion 501 of the bolt 500 by the holding units 300a and 300b. The bolt 500 held here is in a condition of being in contact with the rollers 304a, 304b, and 304c, and thus the bolt 500 is rotatable around the axis line of the bolt 500.

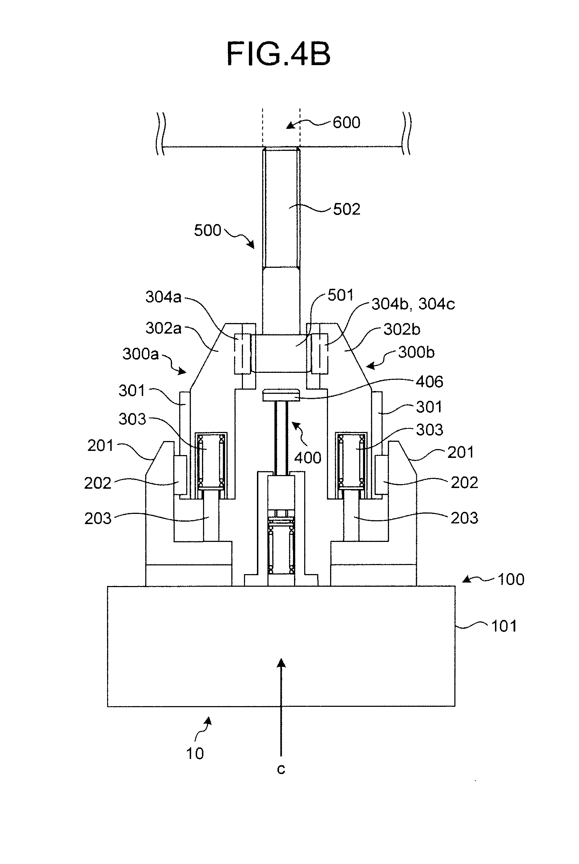

As illustrated in FIG. 4B, the control device then moves the end effector 10, while the bolt 500 is held, to a position in which the tip of the shaft portion 502 of the bolt 500 is to contact a given bolt hole 600 perpendicularly with respect to the bolt hole 600. Exemplified here is a situation in which the bolt hole 600 is opened on a thick plate-like work-piece.

The control device then presses the tip of the shaft portion 502 of the bolt 500 perpendicularly (the arrow c) with respect to the bolt hole 600 by the end effector 10. This makes the holding units 300a and 300b slide in a direction to approach the base 101.

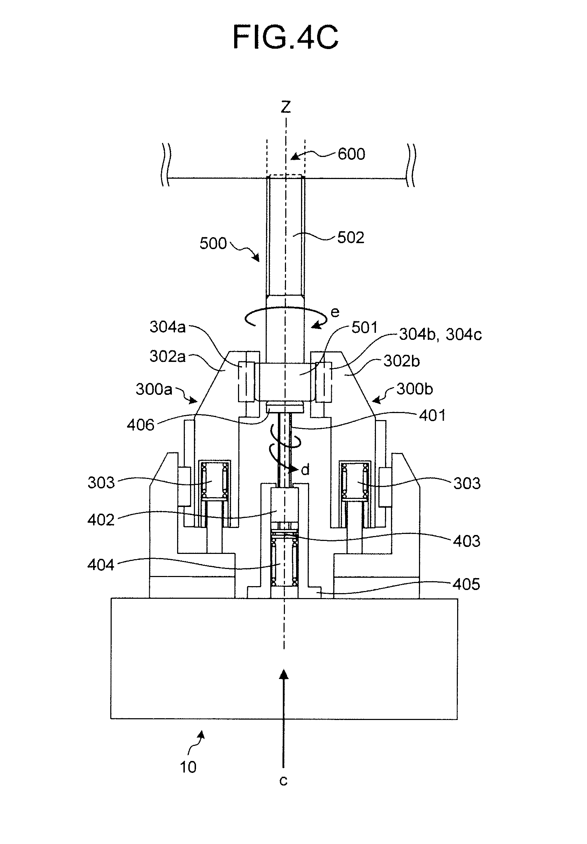

Then, as illustrated in FIG. 4C, further pressing the end effector 10 in the direction of the arrow c makes the head portion 501 of the bolt 500 contact the bolt holder 406.

Because the first springs 303 press the respective holding claws 302a and 302b towards the tip side thereof, the bolt holder 406 is now pressed towards the bolt hole 600 side, and thus the condition in which the bolt holder 406 and the head portion 501 of the bolt 500 are in contact with each other can be maintained.

While the holding units 300a and 300b are made to slide to make the bolt holder 406 and the head portion 501 of the bolt 500 contact with each other, it is not restricted as such. For example, in place of making the holding units 300a and 300b themselves slide, provided may be a mechanism that makes the rollers 304a, 304b, and 304c slide in the direction along the rotation axis Z.

As illustrated in FIG. 4C, when the end effector 10 is further pressed in the arrow c direction from the condition in which the bolt holder 406 is in contact with the head portion 501 of the bolt 500, the feed screw shaft 401 moves towards the cylinder 405 side together with the bolt 500.

In this process, because the feed screw nut 402 is secured to the cylinder 405, the feed screw shaft 401 rotates around the rotation axis Z in the direction of the arrow d. Furthermore, the bolt 500 rotates in the same direction as the rotation of the feed screw shaft 401, more specifically, in the direction of the arrow e.

Because the second spring 404 presses the feed screw shaft 401 towards the head portion 501 side of the bolt 500, the condition of the bolt holder 406 and the head portion 501 of the bolt 500 being in contact with each other can be maintained.

The tip of the shaft portion 502 of the bolt 500 is pressed perpendicularly (the arrow c) with respect to the bolt hole 600. Consequently, the end effector 10 can perform the movement of tightening the bolt 500 to the bolt hole 600 (hereinafter, referred to as temporary tightening).

It is preferable that the pitch of the feed screw shaft 401 and the feed screw nut 402 and that of the bolt 500 be nearly the same. Moreover, it is preferable that the pressing force by the second spring 404 be nearly the same as the sum of the pressing forces of the respective first springs 303 or be greater than such a sum.

Such arrangement can appropriately retain the condition of contact between the bolt 500, which is held by the holding units 300a and 300b, and the bolt holder 406.

As in the foregoing, in the first embodiment, the end effector includes holding units that hold a bolt in a condition of the rollers being in contact with the outer circumference of the head portion of the bolt, and the rotary unit that moves linearly by the movement of the feed screw shaft, accompanied by the rotation.

As a consequence, the end effector in the first embodiment can perform the temporary tightening by pressing down a held bolt to a bolt hole to make the bolt passively rotate. Furthermore, the end effector in the first embodiment does not require a driving mechanism that exerts rotational movement to a bolt (for example, an electric screwdriver), and thus the cost of assembling process can be reduced.

While the rotary unit 400 is exemplified to be secured to the base 101 in the first embodiment, the rotary unit 400 may be configured to be replaced in response to the diameter and pitch of the bolt 500 to be held. In the following second embodiment, described will be the situation of the end effector 10 including the rotary unit 400 that is configured to be replaceable.

### Second Embodiment

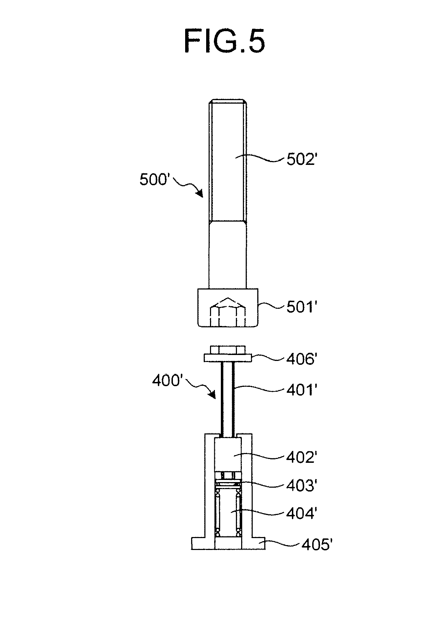

FIG. 5 is a side view of a rotary unit 400' according to a second embodiment. FIG. 5 corresponds to the configuration example of the rotary unit 400 of the end effector 10 in the first embodiment illustrated in FIG. 2. Furthermore, except for the pitch of a feed screw shaft 401' and a feed screw nut 402' and the shape of a bolt holder 406' being different, the configuration is the same as that in FIG. 2. Thus, the descriptions common to both configurations are omitted.

As illustrated in FIG. 5, a situation in which a bolt 500' held by the end effector 10 is a hex socket bolt will be described. In this case, an operator replaces the rotary unit 400 with the rotary unit 400' that corresponds to the shape of a head portion 501' of the bolt 500' and the size of the bolt 500'.

More specifically, the operator replaces the rotary unit 400 screwed and secured to the base 101 with the rotary unit 400', and screws the rotary unit 400' again to secure it onto the base 101. The tip of the bolt holder 406' of the rotary unit 400' is configured to have a shape of a hex wrench of the same size as the hex socket of the bolt 500'.

Furthermore, the pitch of the feed screw shaft 401' and the feed screw nut 402' and that of the bolt 500' are configured to be nearly the same.

The bolt holder 405' here is configured to have the shape of a hex wrench corresponding to a hex socket bolt. However, it is not restricted to this, and when the head portion 501' of the bolt 500' is in another shape such as straight-slot, Phillips-head, and others, the end effector 10, for example, only needs to be configured to include the bolt holder 406' corresponding to such a shape.

While the end effector 10 is configured to include the bolt holder 406' corresponding to the shape of the head portion 501' of the bolt 500', the end effector 10 may be configured to include the bolt holder 406' with only the diameter thereof changed corresponding to the diameter of the bolt 500'.

As in the foregoing, in the end effector in the second embodiment, the rotary unit is configured to be replaceable depending on the bolt to hold. This allows the movement of holding a bolt of a given shape and diameter to temporary tightening of the bolt to be performed by the same robot, and thus the cost of devices required for the assembling process of a work-piece can be reduced.

While the situation of automating the movement of holding a bolt to temporary tightening thereof has been exemplified in the above-described embodiments, the embodiments are not restricted to these. For example, the end effector is made to press on the head portion side of a bolt inserted to a bolt hole to make the bolt holder contact the head portion of the bolt while the rotary unit is in a contracted condition. Then, the end effector is made to move in the direction to be away from the bolt hole while the bolt is rotated by the repulsive force of the second spring included in the rotary unit. Such movement may be performed to remove the bolt.

Furthermore, while the screw member held by the end effector has been exemplified as a bolt that is what is called a male screw in the above-described embodiments, the screw member may be a female screw (for example, a nut). Moreover, the screw member may be a member that includes a male thread or a female thread on a part thereof.

Further effects and modifications can be easily derived by those skilled in the art. Thus, a broader aspect of the present invention is not limited to the specific details and representative embodiments as expressed and described above. Therefore, various changes can be made without departing from the spirit and aspect of the concept of the comprehensive invention defined by the accompanying claims and the equivalents thereof.

### Reference Signs List

- 1: Robot
- 10: End effector
- 11a: Robot arm
- 11b: Robot arm
- 12: Trunk portion
- 13: Support portion
- 100: Slider unit
- 101: Base
- 102: Mount
- 200: Open/close unit
- 201: Open/close claw
- 202: Slider portion
- 203: Support
- 300a: Holding unit
- 300b: Holding unit
- 301: Rail portion
- 302a: Holding claw
- 302b: Holding claw
- 303: First spring
- 304a: Roller
- 304b: Roller
- 304c: Roller
- 400: Rotary unit
- 401: Feed screw shaft
- 402: Feed screw nut
- 403: Thrust bearing
- 404: Second spring
- 405: Cylinder
- 406: Bolt holder
- 500: Bolt
- 501: Head portion
- 502: Shaft portion
- Z: Rotation axis

## Claims

1. An end effector comprising:
a holding unit that holds a screw member to be rotatable around an axis line of the screw member; and
a rotary unit that is provided on the axis line, moves linearly along the axis line in a condition of being in contact with a head portion of the screw member held by the holding unit, and rotates the screw member around the axis line by rotation accompanying the linear motion.

2. The end effector according to claim 1, wherein the holding unit holds the screw member along the axis line not to deviate from the axis line, and is movable along the axis line.

3. The end effector according to claim 2, wherein
the holding unit and the rotary unit are individually pressed towards a tip side thereof along the axis line, and
the rotary unit is pressed onto the head portion of the screw member by movement of the holding unit holding the screw member towards a base end side thereof along the axis line.

4. The end effector according to claim 1, wherein the rotary unit is replaceable in accordance with one or both of a diameter and a pitch of the screw member to be held by the holding unit.

5. The end effector according to claim 1, wherein the holding unit includes:
two or more holding claws; and
an open/close unit that makes the holding claws open and close.

6. The end effector according to claim 1, wherein the holding unit includes a roller that rotates around a rotation axis parallel to the axis line.

7. A robot comprising the end effector according to any one of claims 1 to 6.
